(19) **Europäisches Patentamt / European Patent Office / Office européen des brevets**

(11) **EP 4 592 060 A1**

(12) **EUROPEAN PATENT APPLICATION**
published in accordance with Art. 153(4) EPC

(43) Date of publication:
**30.07.2025 Bulletin 2025/31**

(21) Application number: **23868258.7**

(22) Date of filing: **21.09.2023**

(51) International Patent Classification (IPC):
**B29C 64/314** (2017.01)    **B29C 64/118** (2017.01)
**B29C 64/245** (2017.01)    **B29C 64/295** (2017.01)
**B29C 64/393** (2017.01)    **B33Y 10/00** (2015.01)
**B33Y 70/00** (2020.01)     **B33Y 70/10** (2020.01)
**B33Y 80/00** (2015.01)     **C08K 3/013** (2018.01)
**C08K 5/00** (2006.01)      **C08L 59/04** (2006.01)
**B29K 59/00** (2006.01)     **B29K 105/16** (2006.01)
**B29K 509/00** (2006.01)

(52) Cooperative Patent Classification (CPC):
**B29C 64/118; B29C 64/245; B29C 64/295;
B29C 64/314; B29C 64/393; B33Y 10/00;
B33Y 70/00; B33Y 70/10; B33Y 80/00;
C08K 3/013; C08K 5/00; C08L 59/04**

(86) International application number:
**PCT/JP2023/034287**

(87) International publication number:
**WO 2024/063137 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022 JP 2022151151**

(71) Applicant: **POLYPLASTICS CO., LTD.
Tokyo 108-8280 (JP)**

(72) Inventors:
• TAKAHASHI, Masahiko
  Fuji-shi, Shizuoka 416-8533 (JP)
• KUSAGAYA, Mitsuharu
  Fuji-shi, Shizuoka 416-8533 (JP)

(74) Representative: **Winter, Brandl - Partnerschaft
mbB
Alois-Steinecker-Straße 22
85354 Freising (DE)**

(54) **FILAMENT FOR THREE-DIMENSIONAL MOLDING, METHOD FOR PRODUCING THREE-DIMENSIONAL MOLDED ARTICLE, AND THREE-DIMENSIONAL MOLDED ARTICLE**

(57)    Provided is a filament for three-dimensional molding with which three-dimensional molding with fused filament fabrication is possible. Provided are a three-dimensional molded article using the filament for three-dimensional molding and a method for producing the same.

The filament for three-dimensional molding contains a polyacetal resin, wherein a difference between a melting point Tm2 and a crystallization temperature Tc (Tm2-Tc) measured by a differential scanning calorimeter is 22 °C or higher and 40 °C or lower, and a melt flow rate measured at a temperature of 190 °C and a load of 2.16 kg is 0.8 g/10 min. or more and 8.0 g/10 min. or less.

Description

TECHNICAL FIELD

The present disclosure relates to a filament for three-dimensional molding, a method for producing a three-dimensional molded article, and a three-dimensional molded article.

BACKGROUND ART

3D printers have spread rapidly in recent years because they can fabricate three-dimensional molded articles without using of molds or large-scale melting equipment. Fused filament fabrication (FFF), stereolithography (STL), selective laser sintering (SLS), etc. are known as molding techniques with 3D printers. Fused filament fabrication is a method for forming a three-dimensional molded article by thermally melting and depositing layers of a thermoplastic resin (for example, Patent Documents 1 and 2), and is likely to spread widely, not only for industrial applications, but also for personal use, due to the low cost of the equipment.
Polyacetal resins have excellent mechanical characteristics and are therefore useful if they can be used as molding materials for 3D printers.

Patent Document 1: JP 2021-172084 A

Patent Document 2: JP 2019-131762 A

SUMMARY OF INVENTION

Because the shrinkage factor that accompanies drops in temperature is high in polyacetal resins, there are cases of warping occurring when molding with fused filament fabrication. In particular, when the dimensions of a molded article are large, there are cases of warping occurring in the face contacting the molding stage during the molding process and the face separating from the molding stage. Three-dimensional molding with fused filament fabrication becomes difficult in such cases.
The first problem of the present disclosure is in providing a filament for three-dimensional molding with which three-dimensional molding with fused filament fabrication is possible. The second problem of the present disclosure is in providing a three-dimensional molded article using the filament for three-dimensional molding and a method for producing the same.
The present disclosure has the following embodiments.

[1] A filament for three-dimensional molding including a polyacetal resin,

wherein a difference between a melting point Tm2 and a crystallization temperature Tc (Tm2-Tc) measured by a differential scanning calorimeter is 22 °C or higher and 40 °C or lower, and

a melt flow rate measured at a temperature of 190 °C and a load of 2.16 kg is 0.8 g/10 min. or more and 8.0 g/10 min. or less.

[2] The filament described in [1], wherein the polyacetal resin includes 1.0 mass% or more and 6.0 mass% or less of comonomer units among all constituent units (100 mass%).

[3] The filament described in [2], wherein the comonomer units are oxyalkylene units with a carbon number of 2 or more.

[4] The filament described in [2], wherein the comonomer units are at least one oxyalkylene unit selected from an oxyethylene group, an oxypropylene group, and an oxytetramethylene group.

[5] The filament described in any of [1] to [4], wherein the filament has a mean diameter of 1-3 mm.

[6] The filament described in any of [1] to [5], wherein the filament contains an inorganic or organic filler.

[7] A production method for a three-dimensional molded article, the method including:
forming the three-dimensional molded article with fused filament fabrication using the filament described in any of [1] to [6].

[8] The production method described in [7], wherein forming the three-dimensional molded article includes: forming a three-dimensional molded article on a molding stage under temperature conditions indicated by Formula 1 below:

$$Tm2 > Ts \geq Tc \text{ and } Tc > Ta > Tc-100 \text{ (Formula 1)}$$

wherein Ts is the temperature (°C) of the molding stage, Tc is the crystallization temperature of the filament (°C), Tm2 is the melting point (°C) of the filament, and Ta is the air temperature (°C) of a molding area; and after forming the three-dimensional molded article, separating the three-dimensional molded article from a surface of the molding stage under temperature conditions indicated by Formula 2 below:

$$Tc > Ts \text{ (Formula 2)}$$

wherein Ts and Tc are the same as in Formula 1.

[9] The production method described in [7] or [8], wherein forming the three-dimensional molded article includes forming a base layer on a molding stage and then forming the three-dimensional molded article on the base layer.

[10] The production method described in any of [7] to [9], wherein the three-dimensional molded article obtained in forming the three-dimensional molded article has two points with a linear distance of 5 cm or more on an outer edge of a face contacting a molding stage or on an outer edge of a face contacting a base layer provided on a molding stage.

[11] The production method described in any of [7] to [10], wherein the three-dimensional molded article obtained in forming the three-dimensional molded article has a height from a molding stage of 5 cm or more.

[12] A three-dimensional molded article formed using the filament described in any of [1] to [6].

[13] A three-dimensional molded article including a filament composition for three-dimensional molding,

wherein the filament composition for three-dimensional molding includes a polyacetal resin and a difference between a melting point Tm2 and a crystallization temperature Tc (Tm2-Tc) measured by a differential scanning calorimeter is 22 °C or higher and 40 °C or lower, and

a melt flow rate measured at a temperature of 190 °C and a load of 2.16 kg is 0.8 g/10 min. or more and 8.0 g/10 min. or less.

[14] The three-dimensional molded article described in [12] or [13], wherein the three-dimensional molded article has one or more faces that have two points with a linear distance of 5 cm or more on an outer edge.

[15] The three-dimensional molded article described in any of [12] to [14], wherein a height from one face is 5 cm or more.

According to the present disclosure, it is possible to provide a filament for three-dimensional molding with which three-dimensional molding with fused filament fabrication. According to the present disclosure, it is possible to provide a three-dimensional molded article using the filament for three-dimensional molding and a method for producing the same.

## BRIEF DESCRIPTION OF DRAWINGS

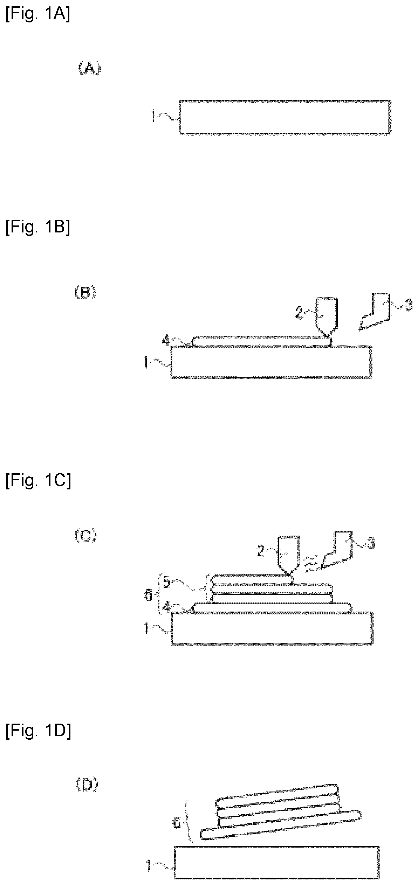

FIG. 1A-D are conceptual drawings showing the workflow of a method for producing a three-dimensional molded article with fused filament fabrication.

## DESCRIPTION OF EMBODIMENTS

Hereinafter, an embodiment of the present disclosure will be described in detail. However, the scope of the present disclosure is not limited to the embodiment to be described here and various modifications can be made within a range not departing from the spirit of the present disclosure. Additionally, when multiple upper limit values and lower limit values are described for specific parameters, any of the upper limit values and lower limit values among these upper limit values and lower limit values may be combined to define a suitable numerical range. Additionally, the upper limit values and/or lower limit values of the numerical ranges described in the present disclosure may be replaced with numerical values that are within those numerical ranges and that are indicated in the examples. The expression "X-Y", which indicates a numerical range, has the meaning "equal to or more than X and equal to or less than Y". When a specific description regarding an embodiment also applies to another embodiment, there may be cases in which that description is omitted for the other embodiment.

[Filament for three-dimensional molding]

The filament for three-dimensional molding according to the present embodiment (hereafter also referred to simply as "filament") includes a polyacetal resin, wherein the difference between a melting point Tm2 and a crystallization temperature Tc (Tm2-Tc) measured by a differential scanning calorimeter is 22 °C or higher and 40 °C or lower, and the melt flow rate measured at a temperature of 190 °C and a load of 2.16 kg is 0.8 g/10 min. or more and 8.0 g/10 min. or less. According to the filament for three-dimensional molding according to the present embodiment, three-dimensional molding with fused filament fabrication is possible even when the dimensions of the molded article are large. Examples of molded articles with large dimensions include, for instance, molded articles in which, when a face that contacts a molding stage is rectangular, the size of the face is 5 cm or more × 5 cm or more (or 10 cm or more × 10 cm or more), molded articles in which, when the face that contacts the molding stage is approximately circular, the diameter thereof is 5 cm or more (or 10 cm or more), and molded articles in which the height from the molding stage is 5 cm or more (or 10 cm or more). The surface area of the molding stage normally increases when fabricating a molded article with large dimensions, so temperature variations on the molding stage surface can arise. Further, these require molding times longer than those when fabricating molded articles with small dimensions. With conventional methods, in cases where a resin with a polyacetal resin as the main component is used, there have been cases of a base layer (layer contacting the molding stage) of the molding article separating from the molding stage during the molding process when there were temperature variations in the molding stage surface or a molding time of a certain time or more was required, and it was difficult to continue molding in such cases. Therefore, the dimensions of three-dimensional molded articles molded with fused filament fabrication using a resin having a polyacetal resin as the main component have conventionally been limited to several centimeters or so. According to the filament for three-dimensional molding according to the present embodiment, even in cases where there are surface variations in the stage temperature during molding or the molding time is long, separation of the base layer from the stage during the molding process is suppressed and a three-dimensional molded article can be stably molded.

A "filament" is a solid material for three-dimensional molding. Filaments that are commonly used as materials for 3D printing have a continuous fiber shape with a circular or substantially circular shape in a cross-section orthogonal to the lengthwise direction of the filament.

In one embodiment, the mean diameter of the filament is 1-3 mm, more preferably 1-2.5 mm, and still more preferably 1.5-2 mm. By setting the diameter of the filament to 1-3 mm, the filament can be used as a molding material in a commercially available three-dimensional molding apparatus. The mean diameter of the filament is a value obtained by extracting a 5 m sample, randomly selecting 20 locations, measuring the diameters (or the longest linear distance on the cross-section) at those locations to the third decimal place using a micrometer, taking the arithmetic mean of the obtained values, and rounding the value to the third decimal place.

In one embodiment, the filament can be made a wound body that is wound onto a core material. By making a wound body, it can be easily mounted in a 3D printer, and molding with a 3D printer is made easier.

(Melting point Tm2 and crystallization temperature Tc of filament)

The difference between the melting point Tm2 and the crystallization temperature Tc (Tm2-Tc) of the filament measured by a differential scanning calorimeter is 22 °C or higher and 40 °C or lower. Due to (Tm2-Tc) of the filament being 22 °C or higher and 40 °C or lower, it tends to be easier to stably mold molded articles with larger dimensions. (Tm2-Tc) of the filament is more preferably 22 °C or higher and 35 °C or lower and still more preferably 22 °C or higher and 30 °C or lower. In one embodiment, (Tm2-Tc) of the filament may be 22 °C or higher and 25 °C or lower or may be 23 °C or higher and 25 °C or lower.

The melting point Tm2 refers to a temperature determined by a method based on JIS K-7121 (2012), wherein the filament is heated from 40 °C to 200 °C at a temperature increase rate of 20 °C/min (first run), is thereafter held at 200 °C for 5 minutes, is next cooled to 40 °C at a temperature decrease rate of 10 °C/min, is thereafter held at 40 °C for 5 minutes, and is reheated from 40 °C to 200 °C at a temperature increase rate of 10 °C/min (second run), the melting point Tm2 being the temperature of a peak top of an endothermic peak of the second run observed during the second run.

The crystallization temperature Tc refers to a temperature determined by a method based on JIS K-7121 (2012), wherein the filament is heated from 40 °C to 200 °C at a temperature increase rate of 20 °C/min (first run), is thereafter held at 200 °C for 5 minutes, and is next cooled to 40 °C at a temperature decrease rate of 10 °C/min, the crystallization temperature Tc being the temperature of a peak top of an exothermic peak observed during the cooling.

In one embodiment, the melting point Tm2 of the filament may be 160 °C or higher and lower than 170 °C or may be 162 °C or higher and 165 °C or lower. In one embodiment, the melting point Tm2 of the filament may be 163 °C, may be 164 °C, or may be in ranges wherein these are the upper limit value or lower limit value of the abovementioned ranges of numerical values.

In one embodiment, the crystallization temperature Tc of the filament may be 130 °C or higher and 145 °C or lower or may be 135 °C or higher and 143 °C or lower. In one embodiment, the crystallization temperature Tc of the filament may be 140 °C, may be 141 °C, or may be in a range having these as the upper limit value or lower limit value of the abovementioned ranges of numerical values.

When the polyacetal resin is a copolymer, adjustment of the melting point Tm2 can be performed by adjusting the proportion of comonomer units in the polyacetal resin. For example, the larger the proportion of comonomer units, the lower the melting point Tm2 tends to be. Adjustment of the crystallization temperature Tc can also be performed by adjusting the proportion of comonomer units. For example, the larger the proportion of comonomer units, the lower the crystallization temperature Tc tends to be.

(Melt flow rate (MFR) of filament)

The MFR of the filament measured at a temperature of 190 °C and a load of 2.16 kg is 0.8 g/10 min. or more and 8.0 g/10 min. or less, preferably 1.0 g/10 min. or more and 7.0 g/10 min. or less, and more preferably 1.2 g/10 min. or more and 6.0 g/10 min. or less. When (Tm2-Tc) of the filament is in the abovementioned predetermined range, three-dimensional molding with fused filament fabrication is easy even when fabricating a molded article with large dimensions due to the MFR being 0.8 g/10 min. or more and 8.0 g/10 min. or less. The MFR of the filament is measured based on ISO 1133-1:2011 (Condition D) under the conditions of a temperature of 190 °C and a load of 2.16 kg. In one embodiment, the MFR of the filament measured with a temperature of 190 °C and a load of 2.16 kg may be 1.2, may be 1.6, or may be in a range having these as the upper limit value or lower limit value of the abovementioned ranges of numerical values.

Adjustment of the MFR is performed mainly with the weight-average molecular weight (Mw) of the polyacetal resin. For example, the greater the weight-average molecular weight (Mw) of the polyacetal resin, the lower the MFR tends to be.

(Polyacetal resin)

The polyacetal resin may be a polyacetal homopolymer or may be a polyacetal copolymer. In one embodiment, from the perspective of balance of mechanical properties and thermal properties, the polyacetal resin preferably includes a polyacetal copolymer. The polyacetal resin may be that wherein the molecules have not only a linear structure, but a branched or crosslinked structure, or may be a publicly known modified polyoxymethylene into which another organic group has been introduced.

Polyacetal homopolymers are polymers having only an oxymethylene group ($-CH_2O-$) in the main chain. Polyacetal homopolymers are copolymer resins that include an oxymethylene unit ($-CH_2O-$) as the main structural unit and furthermore include a comonomer unit other than the oxymethylene unit. "Main structural unit" means a monomer unit of which the proportion in all the constituent units (100 mass%) constituting the polyacetal copolymer exceeds 50 mass% and is preferably 70 mass% or more.

There may be one or more types of comonomer unit included in the polyacetal copolymer. In one embodiment, the comonomer unit is preferably an oxyalkylene unit with a carbon number of two or more, preferably a carbon number of two or more and six or lower. Due to the comonomer unit being an oxyalkylene unit with a carbon number of two or more, thermal stability tends to become good. The comonomer unit is more preferably at least one oxyalkylene unit selected from an oxyethylene group, an oxypropylene group, and an oxytetramethylene group and especially preferably includes an oxyethylene group.

The proportion of comonomer units in the polyacetal copolymer is preferably 1.0 mass% or more and 6.0 mass% or less, more preferably 1.5 mass% or more and 5.5 mass% or less, still more preferably 2.0 mass% or more and 5.0 mass% or less, even more preferably 2.2 mass% or more and 5.0 mass% or less, and especially preferably 2.5 mass% or more and 4.5 mass% or less with respect to all constituent units (100 mass%) of the polyacetal resin. Due to the proportion of comonomer units being 1.0 mass% or more and 6.0 mass% or less with respect to all constituent units (100 mass%) of the polyacetal copolymer, warping and voids can be further reduced and three-dimensional molding with fused filament fabrication becomes easier. Further, three-dimensional molded articles with an excellent exterior appearance can be fabricated. In cases where an oxyethylene unit is included as a comonomer unit, the proportion of oxyethylene units of all comonomer units (100 mass%) is preferably 90 mass% or more and 100 mass% or less and more preferably 95 mass% or more and 100 mass% or less.

Note that the proportion of comonomer units in the polyacetal copolymer can be calculated with a $^1$H-NMR method. For example, the filament is dissolved such that the concentration in deuterated hexafluoroisopropanol becomes 5 mass% to create a sample. This can be calculated with a method for analyzing the sample with $^1$H-NMR and determining the ratio of the integration rate of comonomer units (for example, oxyalkylene units with a carbon number of two or more discussed below) with respect to the peak integration rate of all monomers in the polyacetal copolymer.

The polyacetal copolymer may be any of a random copolymer, a block copolymer, and a graft copolymer. From the perspective of thermal stability, a random copolymer is preferred.

The degree of polymerization, degree of branching, and degree of crosslinking of the polyacetal resin can be appropriately adjusted within ranges where the MFR of the filament is 0.8-8.0 g/10 min.

The weight-average molecular weight (Mw) of the polyacetal resin is not particularly limited so long as the resin has the effects of the present disclosure and can be appropriately adjusted within a range where the MFR of the filament is 0.8-8.0 g/10 min. In one embodiment, because the strength of an obtained molded article tends to be good, the Mw of the polyacetal resin may be 10,000 or more and 400,000 or less. The weight-average molecular weight (Mw) is a value measured (in terms of polystyrene) with size exclusion chromatography (SEC).

One polyacetal resin alone may be included or two or more selected from polyacetal homopolymers and polyacetal copolymers may be combined and included. When including a polyacetal copolymer, two or more polyacetal copolymers wherein the type and/or content of the comonomers and/or the form (random copolymer, block copolymer, graft copolymer, etc.) is different may be included. When including two or more polyacetal resins, the blending proportions thereof can be adjusted to satisfy the difference between the melting point Tm2 and the crystallization temperature Tc (Tm2-Tc), and the MFR value of the filament.

With respect to the total mass of the filament, the content of the polyacetal resin in the filament preferably exceeds 50 mass%, is more preferably 60 mass% or more, is still more preferably 70 mass% or more, may be 80 mass% or more, may be 90 mass% or more, or may be 100 mass%. With respect to all resin components, the content of the polyacetal resin among the resin components constituting the filament is preferably 80 mass% or more, more preferably 90 mass% or more, still more preferably 95 mass% or more, and may be 100 mass%.


(Production method for polyacetal resin)

The polyacetal resin can be produced by a method such as performing bulk polymerization of a monomer (or monomer mixture) including a cyclic trimer or tetramer of formaldehyde (preferably trioxane, which is a cyclic trimer of formaldehyde) and, as necessary, a comonomer using a cationic polymerization catalyst and with the addition of an appropriate amount of a molecular weight modifier, as necessary.

Trioxane is typically obtained by reacting an aqueous solution of formaldehyde in the presence of an acidic catalyst, purified with a method such as distillation, and used. The trioxane used in the polymerization is preferably that with an extremely low content of impurities such as water, methanol, or formic acid.

The polymerization apparatus is not particularly limited and a publicly known apparatus can be used. Further, batch, continuous, etc. methods can also be employed. Maintaining the polymerization temperature at 65-135 °C is preferred. Deactivation of the polymerization catalyst after polymerization can be performed by adding a basic compound, an aqueous solution thereof, or the like to reaction products recovered from the polymerization apparatus or to reaction products in the polymerization apparatus.

Examples of cationic polymerization catalysts include: lead tetrachloride; tin tetrachloride; titanium tetrachloride; aluminum trichloride; zinc chloride; vanadium trichloride; antimony trichloride; phosphorus pentafluoride; antimony pentafluoride; boron trifluoride coordinate compounds such as boron trifluoride, boron trifluoride diethyl etherate, boron trifluoride dibutyl etherate, boron trifluoride dioxanate, boron trifluoride acetic anhydrate, and boron trifluoride triethylamine complex compound; inorganic acids and organic acids such as perchloric acid, acetyl perchlorate, t-butyl perchlorate, hydroxyacetic acid, trichloroacetic acid, trifluoroacetic acid, and p-toluenesulfonic acid; complex salt compounds such as triethyloxonium tetrafluoroborate, triphenylmethyl hexafluoroantimonate, aryl diazonium hexafluorophosphate, and aryl diazonium tetrafluoroborate; alkyl metal salts such as diethyl zinc, triethylaluminum, and diethylaluminum chloride; heteropoly acids; and isopoly acids. Among these, boron trifluoride coordinate compounds such as boron trifluoride, boron trifluoride diethyl etherate, boron trifluoride dibutyl etherate, boron trifluoride dioxanate, boron trifluoride acetic anhydrate, and boron trifluoride triethylamine complex compound in particular are preferred. These catalysts can be diluted in an organic solvent or the like ahead of time and used.

Examples of molecular weight modifiers include linear formal compounds. Examples of linear formal compounds include, for instance, methylal, ethylal, dibutoxymethane, bis(methoxymethyl)ether, bis(ethoxymethyl)ether, and bis(butoxymethyl)ether. Among these, at least one selected from the group consisting of methylal, ethylal, and dibutoxymethane is preferred.

As the basic compound for neutralizing and deactivating the polymerization catalyst, ammonia; amines such as triethylamine, tributylamine, triethanolamine, and tributanolamine; hydroxide salts of alkali metals or alkali earth metals; and other publicly known catalyst deactivating agents can be used. Further, it is preferable that an aqueous solution of these is quickly added to the reaction products to cause deactivation after the polymerization reaction is complete. Washing, separation and recovery of unreacted monomers, drying, and the like can be further performed with conventionally known methods as necessary following the polymerization method and the deactivation method, and the polyacetal resin can be obtained.

Various stabilizers can be blended as necessary to decompose and remove or to perform a stabilization process such as sealing on unstable terminal portions of the polyacetal resin. Conventionally known antioxidants, thermal stabilizers, etc. can be used as stabilizers. For example, hindered phenol-based compounds, nitrogen-containing compounds, alkali or alkali earth metal hydroxides, inorganic salts, carboxylates, etc. can be used singly or in a combination of two or more.

Furthermore, one or more typical additives, for example, colorants such as dyes or pigments, lubricants, crystal nucleating agents, mold release agents, anti-static agents, surfactants, and organic polymer materials can be added as necessary so long as the effects of the present disclosure are not inhibited.

(Other components)

The filament may include other components as necessary. Examples of other components include fibrous, powdered, or flake-shaped inorganic or organic fillers and thermoplastic resins other than polyacetal resins (other thermoplastic resins). The filament may include one or more additives typical for a thermoplastic resin such as, for example, an anti-weather (photo) stabilizer, a colorant such as a dye or pigment, a lubricant, a nucleating agent, a mold release agent, an anti-static agent, or a surfactant, as necessary.

(Inorganic or organic filler)

In one embodiment, the filament can include an inorganic or organic filler. Examples of inorganic or organic fillers can include, for instance, a powdered filler or a flake-shaped filler with a mean particle diameter of 2 nm to 400 $\mu$m or preferably 20 nm to 100 $\mu$m or a fibrous filler with a mean fiber length of 0.1-600 $\mu$m, preferably 1-300 $\mu$m and a mean fiber diameter of 0.001-20 $\mu$m, preferably 0.01-15 $\mu$m. The strength of the obtained three-dimensional molded article is more readily improved by including an inorganic or organic filler. The mean particle diameter of the inorganic or organic filler means particle diameter D50, which is that where the cumulative frequency is 50% in a volume-based arithmetic mean particle distribution according to a laser diffraction/scattering particle distribution measurement method. For example, the mean particle diameter can be measured using a laser diffraction/scattering particle distribution measurement device (product name: LA-960 manufactured by HORIBA, Ltd.). The mean fiber length is the arithmetic mean value of values obtained by measuring 500 fibrous filler fibers with an image measuring device (product name: LUZEXFS manufactured by Nikore CO., LTD.). The mean fiber diameter is the arithmetic mean value of values obtained by measuring the longest linear distance on a cross-section orthogonal to the lengthwise direction of 500 fibrous filler fibers with an image measuring device (product name: LUZEXFS manufactured by Nikore CO., LTD.).

Examples of granular fillers include, for instance, carbon black, graphite, silica, quartz powder, glass beads, glass balloons, glass powders, calcium silicate, aluminum silicate, kaolin, clay, diatomaceous earth, silicates such as wollastonite, metal oxides such as iron oxide, titanium oxide, zinc oxide, antimony trioxide, and alumina, metal carbonates such as calcium carbonate and magnesium carbonate, and metal sulfates such as calcium sulfate and barium sulfate, as well as ferrite, silicon carbide, silicon nitride, boron nitride, and various types of metal powders. These powdered fillers may be used alone and two or more types thereof may be used in combination.

Examples of fibrous fillers include, for instance, inorganic fibrous substances such as glass fibers, milled glass fibers, carbon fibers, asbestos fibers, silica fibers, silica/alumina fibers, alumina fibers, zirconia fibers, boron nitride fibers, silicon nitride fibers, boron fibers, potassium titanate fibers, silicate fibers such as wollastonite, magnesium sulfate fibers, and aluminum borate fibers and furthermore, inorganic fibrous substances such as fibrous materials composed of metals such as stainless steel, aluminum, titanium, copper, and brass. Glass fibers are a particularly representative fibrous filler. High-melting-point organic fibrous substances such as polyamides, fluororesins, polyester resins, and acrylic resins can also be used. These fibrous fillers may be used alone and two or more types thereof may be used in combination.

Examples of flake-shaped fillers include mica, glass flakes, talc, and various metal foils. These flake-shaped fillers may be used alone and two or more types thereof may be used in combination.

When the filament includes an inorganic or organic filler, the content thereof is set to a range wherein the difference between the melting point Tm2 and the crystallization temperature Tc (Tm2-Tc) and the MFR of the filament satisfy the abovementioned values. The content of the inorganic or organic filler can be set to, for example, 0-50 mass% with respect to the total mass of the filament.

(Other thermoplastic resins)

In one embodiment, the filament can include a thermoplastic resin other than the polyacetal resin. Examples of other thermoplastic resins include, for instance, polyethylene resins, polypropylene resins, polyethylene terephthalate resins, polybutylene terephthalate resins, and polyamide resins. These resins may be used alone and two or more types thereof may be used in combination.

When the filament includes another thermoplastic resin, the amount thereof blended is set to a range wherein the difference between the melting point $Tm2$ and the crystallization temperature $Tc$ ($Tm2-Tc$) and the MFR of the filament satisfy the abovementioned values. For example, the content of the other thermoplastic resin can be set to 0-15 parts by mass and can also be set to 1-10 parts by mass with respect to 100 parts by mass of the polyacetal resin.

[Production method for filament]

The filament can be fabricated by extruding the polyacetal resin obtained with the abovementioned production method with an extruder together with other components that the filament may contain, as necessary, cooling and solidifying the extruded strand, and then winding with a winder at a winding speed where the diameter of the filament becomes a desired value.

One polyacetal resin may be used alone in the production method for the filament or two or more selected from polyacetal homopolymers and polyacetal copolymers may be combined and used. When a polyacetal copolymer is used, two or more polyacetal copolymers wherein the type and/or content of the comonomers and/or the form (random copolymer, block copolymer, graft copolymer, etc.) is different may be used in combination. When two or more polyacetal resins are used in combination, the blending proportions thereof can be adjusted to satisfy the difference between the melting point $Tm2$ and the crystallization temperature $Tc$ ($Tm2-Tc$) and the MFR value of the filament.

[Production method for three-dimensional molded article]

The production method for a three-dimensional molded article according to the present embodiment includes using the filament for three-dimensional molding described above to form a three-dimensional molded article with fused filament fabrication. In one embodiment, forming the three-dimensional molded article includes discharging a melt of the filament for three-dimensional molding described above onto a molding stage. In one embodiment, the molding stage may be provided to a 3D printer.

In one embodiment, forming the three-dimensional molded article (hereafter also referred to as "first step") preferably includes:

forming a three-dimensional molded article on a molding stage under temperature conditions indicated by Formula 1 below:

$$Tm2 > Ts \geq Tc \text{ and } Tc > Ta > Tc-100 \text{ (Formula 1)}$$

wherein $Ts$ is the temperature (°C) of the molding stage, $Tc$ is the crystallization temperature of the filament (°C), $Tm2$ is the melting point (°C) of the filament, and $Ta$ is the air temperature (°C) of a molding area; and

after forming the three-dimensional molded article, separating the three-dimensional molded article from a surface of the molding stage (hereafter also referred to as "second step") under temperature conditions indicated by Formula 2 below:

$$Tc > Ts \text{ (Formula 2)}$$

wherein $Ts$ and $Tc$ are the same as in Formula 1.

The "molding area" is a space where a three-dimensional molded article can be formed on the molding stage. In one embodiment, the molding area is preferably a chamber which forms a sealed space to ease temperature adjustment.

Adjustment of the air temperature ($Ta$) of the molding area and the molding stage temperature ($Ts$) can be performed by increasing or lowering the settings on a fused filament fabrication 3D printer, but both the air temperature ($Ta$) of the molding area and the molding stage temperature ($Ts$) mean the actual values of the air temperature of the molding area and the molding stage temperature with respect to given setting conditions rather than temperatures as setting values in the operation of a 3D printer.

The methods for measuring the melting point Tm2 and the crystallization temperature Tc of the filament are as described above regarding the filament.

By setting the temperatures when layering the filaments to the ranges specified in Formula 1 in the first step, the occurrence of warping of a layered article that accompanies drops in temperature when layering can be further suppressed and the layered article can be firmly affixed on the molding stage. As a result, it becomes easier to produce three-dimensional molded articles with large dimensions.

By setting the temperature of the molding stage after molding to the range specified by Formula 2 in the second step, it becomes easy to separate the formed three-dimensional molded article from the molding stage.

FIG. 1 conceptually illustrates the workflow of a method for producing a three-dimensional molded article with fused filament fabrication. FIG. 1(A)-(C) illustrate the first step and FIG. 1(D) illustrates the second step.

First, the temperature Ts of a molding stage 1 and the air temperature Ta of a molding area in a fused filament fabrication 3D printer are set to predetermined temperatures (for example, temperatures satisfying Formula 1 above) (FIG. 1(A)). In one embodiment, for example, when the melting point Tm2 of the polyacetal resin is set to 163. 9 °C and the crystallization temperature Tc is set to 140. 5 °C, the temperature of the molding stage 1 is preferably set to 141 °C or higher and lower than 163. 9 °C and the air temperature of the molding area is preferably set to higher than 40 °C and lower than 140 °C.

Next, the abovementioned filament for three-dimensional molding is melted and discharged onto the molding stage 1 from a discharge nozzle 2. A base layer 4 can be formed by discharging the filament melt from the discharge nozzle 2 while the discharge nozzle 2 scans above the molding stage 1 (FIG. 1(B)). Furthermore, structural portions 5 are formed on the base layer 4 by discharging the filament melt from the discharge nozzle 2 while the discharge nozzle 2 scans above the base layer 4 (FIG. 1(C)). More specifically, the structural portions 5 are formed by sequentially layering the structural portions 5 in a shape corresponding to the cross-section of the structural portions 5 based on three-dimensional data for the structural portions 5 to be formed. In the forming step for the structural portions 5, air may be sprayed from an air duct 3 located proximate to the discharge nozzle 2 to cool and solidify the molding material following layering. After formation of the structural portions 5 is completed, the temperature of the molding stage 1 can be lowered as necessary to decrease the temperature of the base layer below the crystallization temperature of the filament. By doing so, crystallization in the base layer 4 advances and adhesive force of the base layer 4 with respect to the molding stage 1 decreases, and a three-dimensional molded article 6 consisting of the base layer 4 and the structural portions 5 can easily be separated from the molding stage 1 (FIG. 1(D)). In one embodiment, the temperature of the molding stage 1 following formation of the structural portions 5 can be set to a temperature satisfying Formula 2 above. In one embodiment, for example, when the crystallization temperature Tc of the polyacetal resin is set to 140.5 °C, it is preferable that the temperature of the molding stage 1 following formation of the structural portions 5 is lowered to less than 140 °C. The peeled structural portions 5 (or base layer 4 and structural portions 5) can be obtained as the three-dimensional molded article 6. Thereafter, the base layer 4 may be removed by cutting, polishing, or the like, as necessary.

The base layer 4 is the foundation formed below the structural portions 5 and may be formed with an area greater than that of the structural portions 5 and/or such that voids or gaps do not occur. By forming the base layer 4, the structural portions 5 separating from the molding stage when the molding time is longer can be prevented.

In one embodiment, forming the three-dimensional molded article can include forming a base layer on the molding stage and then forming a three-dimensional molded article on the base layer.

In the abovementioned production method for a three-dimensional molded article, separation of the base layer from the stage during the molding process is suppressed even when the molding time is long, so the base layer 4 does not necessarily need to be formed. When the base layer 4 is not formed, the structural portions 5 may be directly formed on the molding stage 1.

In one embodiment, the size of the molding stage may have a side length (or diameter) of 5 cm or more, 10 cm or more, 15-100 cm, or 20-90 cm such that a molded article with large dimensions can be formed.

In one embodiment, the three-dimensional molded article obtained in forming the three-dimensional molded article can have two points with a linear distance of 5 cm or more or can have two points with a linear distance of 10 cm or more on an outer edge of a face contacting the molding stage or on an outer edge of a face contacting the base layer provided on the molding stage. Three-dimensional molding with fused filament fabrication even of three-dimensional molded articles with larger than conventional dimensions, such as three-dimensional molded articles having a face having two points with a linear distance of 5 cm or more (or 10 cm or more) on an outer edge of a face contacting the molding stage or on an outer edge of a face contacting the base layer provided on the molding stage, is possible.

In another embodiment, the face contacting the molding stage or the face contacting the base layer provided on the molding stage in the three-dimensional molded article obtained in forming the three-dimensional molded article is a polygonal shape and the length of one or more sides of the polygonal shape may be 5 cm or more or may be 10 cm or more.

In another embodiment, the face contacting the molding stage or the face contacting the base layer provided on the molding stage in the three-dimensional molded article obtained in forming the three-dimensional molded article is circular and the diameter of the circular shape may be 5 cm or more or may be 10 cm or more.

In one embodiment, the height from the molding stage of the three-dimensional molded article obtained in forming the three-dimensional molded article may be 5 cm or more or may be 10 cm or more. Three-dimensional molding with fused filament fabrication even of three-dimensional molded articles with larger than conventional dimensions such as a height from the molding stage of 5 cm or more is possible.

[Three-dimensional molded article]

The three-dimensional molded article according to the present embodiment is a three-dimensional molded article formed using the filament for three-dimensional molding described above. In one embodiment, the three-dimensional molded article may be a three-dimensional molded article molded by fused filament fabrication of the filament for three-dimensional molding described above. A three-dimensional molded article can be deemed to be that formed using the filament for three-dimensional molding by confirming molding lines (drawing lines) and layering traces when the surface of the three-dimensional molded article is observed by sight or with a stereoscopic microscope. The thickness of the molding lines (drawing lines) is not limited and may be, for example, 100-1,000 μm.

In one embodiment, the three-dimensional molded article may be that which includes a filament composition for three-dimensional molding, wherein the filament composition for three-dimensional molding includes a polyacetal resin, the difference between the melting point Tm2 and the crystallization temperature Tc (Tm2-Tc) measured by a differential scanning calorimeter is 22 °C or higher and 40 °C or lower, and the melt flow rate measured at a temperature of 190 °C and a load of 2.16 kg is 0.8 g/10 min. or more and 8.0 g/10 min. or less.

"Filament composition for three-dimensional molding" means a composition including components that constitute the filament for three-dimensional molding described above. The filament composition for three-dimensional molding includes a polyacetal resin and thus is hereafter also referred to simply as "polyacetal resin composition". In one embodiment, molding lines (drawing lines) and layering traces can be confirmed in the three-dimensional molded article including the filament composition for three-dimensional molding when the surface of the three-dimensional molded article is observed by sight or with a stereoscopic microscope.

In one embodiment, the three-dimensional molded article may have one or more faces having two points with a linear distance of 5 cm or more on an outer edge or may have one or more faces having two points with a linear distance of 10 cm or more on an outer edge. In one embodiment, the height from one face of the three-dimensional molded article may be 5 cm or more or may be 10 cm or more. In one embodiment, the three-dimensional molded article may have two points with a linear distance of 5 cm or more on an outer edge or may have two points with a linear distance of 10 cm or more on an outer edge.

In another embodiment, the three-dimensional molded article has one or more polygonal faces and the length of one or more sides of the polygonal shape may be 5 cm or more or may be 10 cm or more. In another embodiment, the three-dimensional molded article has one or more circular faces and the diameter of the circular shape may be 5 cm or more or may be 10 cm or more.

## EXAMPLES

The present disclosure shall be explained more specifically by referring to the following examples, but the interpretation of the present disclosure is not limited by these examples.

[Production Example 1] (Production of polyacetal resin)

Polymerization was performed using a continuous mixing reactor that is provided with a jacket on the outside through which a heating medium (or refrigerant) passes and is configured from two rotation shafts with paddles having a cross-section with a shape in which two circles partially overlap. Specifically, trioxane and a comonomer (1,3-dioxolane) were added to the reactor at the proportions shown in Table 1 while the two rotation shafts with paddles were each rotated at 150 rpm. Furthermore, methylal was added as a molecular weight modifier at the proportion shown in Table 1. Next, a catalyst mixture in which catalytic boron trifluoride gas was mixed with the trioxane so as to be 0.005 mass% in terms of boron trifluoride was continuously added and bulk polymerization was performed. After polymerization was complete, an 80 °C aqueous solution containing 0.1 mass% of triethylamine was added to deactivate the catalyst while the reaction product expelled from the reactor was quickly passed through a crusher. Furthermore, after separation, washing, and drying, a crude polyacetal resin was obtained.

Next, 4 parts by mass of an aqueous solution of 5 mass% triethylamine and 0.03 parts by mass of pentaerythrityl tetrakis [3-(3,5-di-tert-butyl-4-hydroxyphenyl)propionate] (an antioxidant) were added to 100 parts by mass of the crude polyacetal resin, this was melt-kneaded at 210 °C with a twin-screw extruder, and the unstable portions of the crude polyacetal resin were removed. 0.3 parts by mass of pentaerythrityl-tetrakis[3-(3,5-di-tert-butyl-4-hydroxyphenyl)propionate] and 0.15 parts by mass of melamine were further added as stabilizers to 100 parts by mass of the polyacetal resin obtained with the abovementioned method, this was melt-kneaded at 210 °C with a twin-screw extruder, and a polyacetal resin was obtained in pellet form.

The amount of the comonomer with respect to all monomers (100 mass%) in the obtained polyacetal resin was 5.9 mass%. Further, the proportion of comonomer units (in terms of oxyethylene units) with respect to all constituent units (100 mass%) of the polyacetal resin calculated with a $^1$H-NMR method was 3.5 mass%. The detailed calculation method for the comonomer units shall be discussed below.

[Production Example 2]

A polyacetal resin in pellet form was obtained in the same manner as Production Example 1 other than the amounts of trioxane, the comonomer (1,3-dioxolane), and methylal charged being set to the proportions shown in Table 1. The proportion of comonomer units (in terms of oxyethylene units) with respect to all constituent units (100 mass%) of the polyacetal resin was measured with the following method. The results are shown in Table 1.

(Comonomer units)

A sample was fabricated by cutting the obtained polyacetal resin in pellet form into small pieces with a nipper so as to readily dissolve in a solvent and dissolving the pieces in deuterated hexafluoroisopropanol such that the concentration became 5 mass%. The sample was analyzed with $^1$H-NMR (product name: Avance III 400 manufactured by Bruker, magnetic field strength: 400 MHz, reference substance; tetramethylsilane; temperature: 27 °C, number of accumulations: 128) and the ratio of the integration rate of comonomer units (oxyethylene units) with respect to the peak integration rate of all monomers in the polyacetal copolymer was determined.

[Example 1]

A filament with a mean diameter of 1.75 mm was fabricated with the following method using the polyacetal resin in pellet form obtained in Production Example 1.

The polyacetal resin pellets were put into a tabletop extruder (AS-1 manufactured by APEX JAPAN CO., LTD.) and extrusion was performed at a barrel temperature of 200 °C and a screw speed of 40 rpm. After cooling and solidifying the extruded strand with water, a filament consisting of the polyacetal resin was obtained by winding the strand with a filament winder (Spooler manufactured by Filabot) at a winding rate such that the diameter of the filament became 1.75±0.1 mm.

The MFR, melting point Tm2, crystallization temperature Tc, and mean diameter of the obtained filament were measured with the following methods. The MFR, melting point Tm2, and crystallization temperature Tc values are shown in Table 1.

(Melt flow rate (MFR))

The melt flow rate was measured in accordance with ISO 1133 (Condition D) by applying a load of 2.16 kg at a temperature of 190 °C.

(Melting point Tm2 and crystallization temperature Tc)

Using a differential scanning calorimeter (product name: DSC 8500 manufactured by PerkinElmer) the temperature of a peak top of an exothermic peak observed when the filament was heated from 40 °C to 200 °C at a temperature increase rate of 20 °C/min. (first run), was thereafter held at 200 °C for 5 minutes, and was next cooled to 40 °C at a temperature decrease rate of 10 °C/min. according to JIS K-7121 (2012) was measured as the crystallization temperature Tc. Then, the temperature of a peak top of an endothermic peak of a second run observed when the filament was thereafter held at 40 °C for 5 minutes and was reheated from 40 °C to 200 °C at a temperature increase rate of 10 °C/min. was measured as the melting point Tm2.

(Measurement of mean diameter of filament)

A 5 m sample was extracted from the obtained filament, 20 locations were selected randomly, and the diameters at these locations were measured to the third decimal place with a micrometer (product name: ABSOLUTE manufactured by Mitutoyo Corporation). Next, the mean value thereof was rounded to the third decimal place and made the mean diameter of the filament.

The obtained filament was then used to fabricate three-dimensional molded articles with the following method.

(First step)

Prepared filaments were set in a fused filament fabrication 3D printer (product name: FUNMAT HT Enhanced manufactured by INTAMSYS Technology Co. Ltd.) and three three-dimensional molded articles (80 mm × 10 mm × 4 mm test piece A, a 20 mm × 20 mm × 20 mm rectangular parallelepiped, and a 50 mm × 50 mm × 50 mm rectangular parallelepiped) were formed. Specifically, with the temperature conditions shown below, a large sheet-like base layer with respective margins of 1 cm was first formed with respect to the bottom face shape of each of the abovementioned molded articles and then the structural portions were formed with the same temperature conditions. The inner diameter of the nozzle which discharges the filament in the 3D printer is 0.4 mm, the layering pitch was set to 0.2 mm, and the drawing rate for the structural portions was set to 30 mm/s.

<Temperature conditions in first step>

Discharge nozzle temperature: 205 °C

Molding stage temperature (Ts): 155 °C

Air temperature (Ta) of the molding area: 94 °C

<Temperature conditions in second step>

Molding stage temperature (Ts): 120 °C
In Example 1, the three-dimensional molded articles were in a state of being affixed on the molding stage, the molding material (filament melt) was layered to the end without issue, and all three three-dimensional molded articles were able to be fabricated.

(Second step)

After the first step was completed, the temperature of the molding stage was lowered to 120 °C and the three-dimensional molded articles were separated from the molding stage. At this time, the entire base layer in all three three-dimensional molded articles whitened and adhesion with respect to the surface of the molding stage decreased, so the three-dimensional molded articles were in a state where they had naturally separated from the molding stage without any particular separation work having been carried out.

[Example 2]

A polyacetal resin composition in pellet form was obtained in the same manner as Example 1 other than 100 parts by mass of the polyacetal resin in pellet form obtained in Production Example 1 and 10 parts by mass of glass fibers (chopped strands ECS 03 T-651G manufactured by Nippon Electric Glass Co., Ltd., fiber diameter: 9 $\mu$m, fiber length: 3 mm) having been melt-kneaded at 210 °C with a twin-screw extruder. A filament with a mean diameter of 1.75 mm was fabricated with the obtained polyacetal resin composition in the same manner as Example 1. The MFR, melting point Tm2, crystallization temperature Tc, and mean diameter of the obtained filament were measured in the same manner as in Example 1. The MFR, melting point Tm2, and crystallization temperature Tc values are shown in Table 1.
Next, three three-dimensional molded articles were formed with the same temperature conditions and production method as in Example 1. In Example 2 as well, all three three-dimensional molded articles were in a state of being affixed on the molding stage, the molding material was layered to the end without issue, and the three-dimensional molded articles were able to be fabricated. Further, by lowering the temperature of the stage after molding, the three-dimensional molded articles naturally separated from the molding stage in the same manner as in Example 1.

[Comparative Example 1]

A filament with a mean diameter of 1.75 mm was fabricated in the same manner as in Example 1 other than the polyacetal resin in pellet form obtained in Production Example 2 being used. The MFR, melting point Tm2, crystallization temperature Tc, and mean diameter of the obtained filament were measured in the same manner as in Example 1. The MFR, melting point Tm2, and crystallization temperature Tc values are shown in Table 1.
Next, three three-dimensional molded articles were formed with the same temperature conditions and production method as in Example 1. In Comparative Example 1, the 80 mm × 10 mm × 4 mm test piece A and the 20 mm × 20 mm × 20 mm rectangular parallelepiped three-dimensional molded articles were able to be formed, but the 50 mm × 50 mm × 50 mm rectangular parallelepiped molded article separated from the molding stage at the base layer forming stage and molding in the first step could not be completed, so a three-dimensional molded article was not able to be formed.

[Table 1]

| | | | EXAMPLE 1 | EXAMPLE 2 | COMPARATIVE EXAMPLE 1 |
|---|---|---|---|---|---|
| POLYACETAL RESIN | | | (PRODUCTION EXAMPLE 1) | (PRODUCTION EXAMPLE 1) | (PRODUCTION EXAMPLE 2) |
| | TRIOXANE | (PARTS BY MASS) | 100 | 100 | 100 |
| | 1,3-DIOXOLANE | | 5.5 | 5.5 | 3.4 |
| | METHYLAL | | 0.1 | 0.1 | 0.4 |
| FILAMENT | COMONOMER UNIT RATIO | (MASS%) | 3.5 | 3.5 | 2.1 |
| | MFR (190 °C, 2.16 kgf) | (g/10 min.) | 1.6 | 1.2 | 2.5 |
| | MELTING POINT (Tm2) | (°C) | 163.9 | 163.9 | 165.8 |
| | CRYSTALLIZATION TEMPERATURE (Tc) | | 140.5 | 140.5 | 144.5 |
| | (Tm2-Tc) | | 23.4 | 23.4 | 21.3 |
| EVALUATION RESULTS | TEST PIECE A | | ○ | ○ | ○ |
| | 20 mm ISOMETRIC RECTANGULAR PARALLELEPIPED | | ○ | ○ | ○ |
| | 50 mm ISOMETRIC RECTANGULAR PARALLELEPIPED | | ○ | ○ | X |

O: A three-dimensional molded article was obtained.
X: The molded article separated from the molding stage at the base layer forming stage, and molding in the first step could not be completed.

## INDUSTRIAL APPLICABILITY

The filament of the present disclosure is that with which three-dimensional molding with fused filament fabrication is possible and therefore has industrially applicability as a filament for 3D printers.

## REFERENCE SIGNS LIST

1    Molding stage

2    Discharge nozzle

3    Air duct

4    Base layer

5    Structural portions

6   Three-dimensional molded article

**Claims**

1.  A filament for three-dimensional molding comprising a polyacetal resin,

    wherein a difference between a melting point Tm2 and a crystallization temperature Tc (Tm2-Tc) measured by a differential scanning calorimeter is 22 °C or higher and 40 °C or lower, and
    a melt flow rate measured at a temperature of 190 °C and a load of 2.16 kg is 0.8 g/10 min. or more and 8.0 g/10 min. or less.

2.  The filament according to claim 1, wherein the polyacetal resin comprises 1.0 mass% or more and 6.0 mass% or less of comonomer units among all constituent units (100 mass%).

3.  The filament according to claim 2, wherein the comonomer units are oxyalkylene units with a carbon number of 2 or more.

4.  The filament according to claim 2, wherein the comonomer units are at least one oxyalkylene unit selected from an oxyethylene group, an oxypropylene group, and an oxytetramethylene group.

5.  The filament according to any one of claims 1 to 4, wherein the filament has a mean diameter of 1-3 mm.

6.  The filament according to any one of claims 1 to 4, wherein the filament contains an inorganic or organic filler.

7.  A production method for a three-dimensional molded article, the method comprising:
    forming the three-dimensional molded article with fused filament fabrication using the filament according to claim 1.

8.  The production method according to claim 7, wherein forming the three-dimensional molded article comprises:
    forming a three-dimensional molded article on a molding stage under temperature conditions indicated by Formula 1 below:

    $$Tm2 > Ts \geq Tc \text{ and } Tc > Ta > Tc-100 \text{ (Formula 1)}$$

    wherein Ts is the temperature (°C) of the molding stage, Tc is the crystallization temperature of the filament (°C), Tm2 is the melting point (°C) of the filament, and Ta is the air temperature (°C) of a molding area; and
    after forming the three-dimensional molded article, separating the three-dimensional molded article from a surface of the molding stage under temperature conditions indicated by Formula 2 below:

    $$Tc > Ts \text{ (Formula 2)}$$

    wherein Ts and Tc are the same as in Formula 1.

9.  The production method according to claim 7 or 8, wherein forming the three-dimensional molded article comprises forming a base layer on a molding stage and then forming a three-dimensional molded article on the base layer.

10. The production method according to claim 7 or 8, wherein the three-dimensional molded article obtained in forming the three-dimensional molded article has two points with a linear distance of 5 cm or more on an outer edge of a face contacting a molding stage or on an outer edge of a face contacting a base layer provided on a molding stage.

11. The production method according to claim 7 or 8, wherein the three-dimensional molded article obtained in forming the three-dimensional molded article has a height from a molding stage of 5 cm or more.

12. A three-dimensional molded article formed using the filament according to claim 1.

13. A three-dimensional molded article comprising a filament composition for three-dimensional molding,

    wherein the filament composition for three-dimensional molding comprises a polyacetal resin and a difference between a melting point Tm2 and a crystallization temperature Tc (Tm2-Tc) measured by a differential scanning calorimeter is 22 °C or higher and 40 °C or lower, and
a melt flow rate measured at a temperature of 190 °C and a load of 2.16 kg is 0.8 g/10 min. or more and 8.0 g/10 min. or less.

14. The three-dimensional molded article according to claim 12 or 13, wherein the three-dimensional molded article has one or more faces having two points with a linear distance of 5 cm or more on an outer edge.

15. The three-dimensional molded article according to claim 12 or 13, wherein a height from one face is 5 cm or more.

[Fig. 1A]

(A)

[Fig. 1B]

(B)

[Fig. 1C]

(C)

[Fig. 1D]

(D)

## INTERNATIONAL SEARCH REPORT

| | International application No. |
|---|---|
| | **PCT/JP2023/034287** |

**A. CLASSIFICATION OF SUBJECT MATTER**

*B29C 64/314*(2017.01)i; *B29C 64/118*(2017.01)i; *B29C 64/245*(2017.01)i; *B29C 64/295*(2017.01)i; *B29C 64/393*(2017.01)i; *B33Y 10/00*(2015.01)i; *B33Y 70/00*(2020.01)i; *B33Y 70/10*(2020.01)i; *B33Y 80/00*(2015.01)i; *C08K 3/013*(2018.01)i; *C08K 5/00*(2006.01)i; *C08L 59/04*(2006.01)i; *B29K 59/00*(2006.01)n; *B29K 105/16*(2006.01)n; *B29K 509/00*(2006.01)n

FI: B29C64/314; B29C64/118; B29C64/245; B29C64/295; B29C64/393; B33Y10/00; B33Y70/00; B33Y70/10; B33Y80/00; C08K3/013; C08K5/00; C08L59/04; B29K59:00; B29K105:16; B29K509:00

According to International Patent Classification (IPC) or to both national classification and IPC

**B. FIELDS SEARCHED**

Minimum documentation searched (classification system followed by classification symbols)

B29C64/00-64/40; B33Y10/00-99/00; C08K3/013; C08K5/00-5/59; C08L59/00-59/04; B29K59/00; B29K105/16-105/18; B29K509/00-509/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-193277 A (ASAHI KASEI CORP) 03 December 2020 (2020-12-03) paragraphs [0091], [0102], table 1 | 12-15 |
| X | US 2021/0206051 A1 (TICONA LLC) 08 July 2021 (2021-07-08) paragraphs [0009]-[0010], [0013], [0037], [0083]-[0084], [0109], [0120] | 1-2, 5-7, 10-15 |
| Y | | 3-4, 8-9 |
| Y | JP 2021-172084 A (POLYPLASTICS CO) 01 November 2021 (2021-11-01) paragraphs [0021]-[0025], [0027]-[0029], [0035], [0039], [0042]-[0043] | 3-4, 8-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/034287**

| Patent document cited in search report | | | Publication date (day/month/year) | Patent family member(s) | | | Publication date (day/month/year) |
|---|---|---|---|---|---|---|---|
| JP | 2020-193277 | A | 03 December 2020 | (Family: none) | | | |
| US | 2021/0206051 | A1 | 08 July 2021 | WO | 2021/127102 | A1 | |
| | | | | CN | 115135668 | A | |
| JP | 2021-172084 | A | 01 November 2021 | (Family: none) | | | |

Form PCT/ISA/210 (patent family annex) (January 2015)

**EP 4 592 060 A1**

**REFERENCES CITED IN THE DESCRIPTION**

**Patent documents cited in the description**

- JP 2021172084 A
- JP 2019131762 A